Europäisches Patentamt

European Patent Office

Office européen des brevets

(19)

(11)    EP 0 995 654 B1

(12)    **EUROPÄISCHE PATENTSCHRIFT**

(45) Veröffentlichungstag und Bekanntmachung des Hinweises auf die Patenterteilung:
**06.03.2002 Patentblatt 2002/10**

(51) Int Cl.⁷: **B60T 7/12**

(21) Anmeldenummer: **99118497.9**

(22) Anmeldetag: **18.09.1999**

(54) **Verfahren und Vorrichtung zum Halten eines Kraftfahrzeugs unter einer darauf wirkenden Kraft**

Method and device for holding a vehicle under a force acting thereon

Méthode et dispositif pour arrêter un véhicule soumis à une force

(84) Benannte Vertragsstaaten:
**AT BE CH CY DE DK ES FI FR GB GR IE IT LI LU MC NL PT SE**

(30) Priorität: **20.10.1998 DE 19848209**

(43) Veröffentlichungstag der Anmeldung:
**26.04.2000 Patentblatt 2000/17**

(73) Patentinhaber: **Volkswagen Aktiengesellschaft 38436 Wolfsburg (DE)**

(72) Erfinder:
• **Adamis, Panagiotis, Prof. 38442 Wolfsburg (DE)**

• **Fähland, Jörg, Dipl.-Ing. 38524 Sassenburg (DE)**

(56) Entgegenhaltungen:
EP-A- 0 507 466       EP-A- 0 552 560
EP-A- 0 822 129       WO-A-97/28030
DE-A- 19 525 552      US-A- 5 580 136

• **PATENT ABSTRACTS OF JAPAN vol. 012, no. 001 (M-656), 6. Januar 1988 (1988-01-06) & JP 62 166123 A (MAZDA MOTOR CORP), 22. Juli 1987 (1987-07-22)**

• **PATENT ABSTRACTS OF JAPAN vol. 011, no. 263 (M-619), 26. August 1987 (1987-08-26) & JP 62 064664 A (ISUZU MOTORS LTD), 23. März 1987 (1987-03-23)**

**Beschreibung**

Die Erfindung betrifft ein Verfahren und eine Vorrichtung zum Halten eines Kraftfahrzeugs unter einer auf das Fahrzeug wirkenden äußeren Kraft und insbesondere unter einer äußeren rücktreibenden Kraft. Ein solches Verfahren bzw. eine solche Vorrichtung wird vorwiegend als Anfahrhilfe an einem Hang eingesetzt wird. Insbesondere bezieht sich die Erfindung auf Fahrzeuge mit einer Bremsanlage mit geregelter Bremskraft wie z.B. einem Antiblockiersystem und mit einer Kupplungsanlage mit extern ansteuerbaren Kupplungsstellern.

Dokument EP-A-0822129 zeigt eine Vorrichtung nach dem Oberbegriff des Anspruchs 4, und ein Verfahren zum Aktivieren eines Bremssystems eines Kraftfahrzeuges.

Im Stand der Technik ist als Anfahrhilfe aus DE 40 27 793 eine Anordnung zum Halten eines Fahrzeugs auf einer geneigten Fahrbahn bekannt. Die genannte Anordnung, die für Kraftfahrzeuge mit einem elektronischen ABS vorgesehen ist, verfügt in mindestens einem von einem Bremsdruckgeber zu den Einlaßventilen führenden Druckmittelweg über elektrisch betätigbare, in der Ruhestellung auf Durchlaß geschaltete, auf Sperren umschaltbare Mehrwegventile, denen Druckbegrenzungsventile parallel liegen und die als Halteventile dienen. Elektronische Schaltkreise steuern in der Lösestellung des Bremsdruckgebers in Abhängigkeit von Haltebefehlen oder Haltesignalen die Halteventile an und/oder schalten die Hydraulikpumpe einer Hilfsdruckquelle ein. Jedoch ist die Verwendbarkeit der Anordnung zum Halten eines Fahrzeugs nach diesem Stand der Technik insoweit eingeschränkt, als sie nur auf Haltesignale, d.h. eine Bremsdruckvorgabe als Eingangsgröße anspricht. Mit anderen Worten, beim Anfahren ist die Bremse des Fahrzeugs zunächst angezogen, und sie wird zweit gelöst, wenn genügend Antriebsmoment aufgebaut worden ist, um das Fahrzeug hangaufwärts in Bewegung zu setzen.

Es sind jedoch viele andere Situationen vorstellbar, bei denen ein Eingriff einer dem Fahrer assistierenden Steuerung wünschenswert ist, wie z.B. bei dem Halten eines Fahrzeugs am Hang nur mit Fahrpedal und Kupplung, wo ein hohes Antriebsmoment des Motors gegeben ist und keine Bremsdruckvorgabe vorliegt. In einer solchen Situation ist der Fahrzustand des Fahrzeugs der folgende: Das Fahrzeug wird an einem Berg mit der Kupplung (naß, trocken oder hydraulisch) oder einem hydraulischen Wandler mit Hilfe der Motorantriebskraft aber ohne Zuhilfenahme der Fahrzeugbremse gegen die Hangabtriebskraft gehalten, so daß es auf der Stelle bleibt oder auch leicht zurückrollt. In Abhängigkeit von der Steigung und der Masse des Fahrzeugs wird dabei erhebliche Wärme im Anfahrelement erzeugt wird, so daß es bereits nach kurzer Zeit zu Überhitzung und in der Folge zu einem Versagen des Anfahrelements oder zu einer Schädigung des Getriebes kommen kann.

Es ist Aufgabe der vorliegenden Erfindung, ein Verfahren und eine Vorrichtung zum Halten eines Kraftfahrzeugs unter einer äußeren Kraft anzugeben, wodurch bei einer großen äußeren rücktreibenden Kraft der Triebstrang des Fahrzeugs vor einer Überlastung geschützt wird.

Die Aufgabe wird gelöst durch ein Verfahren nach Anspruch 1 und eine Vorrichtung nach Anspruch 4. Bevorzugte Ausführungsformen der Erfindung sind Gegenstand der Unteransprüche.

Die Erfindung beruht darauf, daß bei Erkennen von Fahrzeugstillstand oder Rückwärtsrollen des Fahrzeugs bei gleichzeitiger hoher Last des Motors zur Vermeidung von Überlastung der Triebstrang unterbrochen wird, indem die Kupplung gelöst wird. Um ein Zurückrollen des Fahrzeugs aufgrund der äußeren Kräfte zu verhindern, wird gleichzeitig mit dem Lösen der Kupplung das Bremssystem aktiviert. Erfindungsgemäß wird also von einer Steuereinheit ein Aktivierungssignal zum Aktivieren des Bremssystems und ein Aktivierungssignal zum Lösen der Kupplung des Fahrzeugs ausgegeben.

Das erfindungsgemäße Verfahren zum Aktivieren eines Bremssystems eines Kraftfahrzeuges weist die Schritte auf: Erfassen der Geschwindigkeit des Kraftfahrzeugs und Vergleichen der Geschwindigkeit mit einer Referenzgeschwindigkeit, Erfassen der Motorleistung und Vergleichen der Motorleistung mit einer Referenzmotorleistung und Ausgeben eines ersten Aktivierungssignals an das Bremssystem, so daß eine Bremskraft auf die Räder ausgeübt wird, und eines zweiten Aktivierungssignals an einen Kupplungssteller, so daß die Kupplung gelöst wird, wenn die Geschwindigkeit einen Wert unter der Referenzgeschwindigkeit annimmt und die Motorleistung einen Wert über der Referenzmotorleistung hat.

In einer bevorzugten Ausführungsform der Erfindung wird die Motordrehzahl nach dem Lösen der Kupplung auf der vor dem Lösen gewählten Motordrehzahl "eingefroren". Dazu wird ein drittes Aktivierungssignal an eine elektronische Motorleistungssteuerung (EGas) des Fahrzeugs ausgegeben.

Die erfindungsgemäße Vorrichtung zum Aktivieren eines Bremssystems eines Kraftfahrzeuges umfaßt eine Geschwindigkeitserfassungsvorrichtung zum Erfassen der Geschwindigkeit des Kraftfahrzeugs und eine Motorleistungserfassungsvorrichtung zum Erfassen der Motorleistung, wobei eine Steuereinheit zum Empfangen der Geschwindigkeit des Kraftfahrzeugs und der Motorleistung von der Geschwindigkeitserfassungsvorrichtung bzw. von der Motorleistungserfassungsvorrichtung, zum Vergleichen der Geschwindigkeit mit einer Referenzgeschwindigkeit und zum Vergleichen der Motorleistung mit einer Referenzmotorleistung, und zum Ausgeben eines ersten Aktivierungssignals an das Bremssystem, so daß eine Bremskraft auf die Räder ausgeübt wird, und eines zweiten Aktivierungssignals an einen Kupplungssteller, so daß die Kupplung gelöst wird, wenn die Geschwindigkeit einen Wert unter der Referenzgeschwindigkeit annimmt und die Motorleistung einen Wert über der Referenzmotorleistung hat, vorgesehen ist.

Vorteile des Verfahrens und der Vorrichtung sind dabei, daß auf bereits vorhandene Komponenten eines mit ABS ausgerüsteten Fahrzeugs zurückgegriffen werden kann, so daß durch diese Einrichtungen und entsprechende elektronische Schaltkreise praktisch kein Mehraufwand entsteht.

Die Referenzwerte sind vorzugsweise als Schwellwerte anzusehen die entsprechend der offenbarten Bedingungen das Verfahren bzw. die Vorrichtung beeinflussen bzw. von den Werten wird dann ausgegangen.

Weitere Merkmale und Vorteile der Erfindung ergeben sich aus der folgenden Beschreibung von bevorzugten Ausführungsformen der Erfindung, wobei Bezug genommen wird auf die beigefügten Zeichnungen.

Fig. 1 zeigt ein Kraftfahrzeug an einer Steigung mit den für das erfindungsgemäße Verfahren wesentlichen Größen.

Fig. 2 zeigt ein Blockschaltbild einer Ausführungsform der erfindungsgemäßen Vorrichtung.

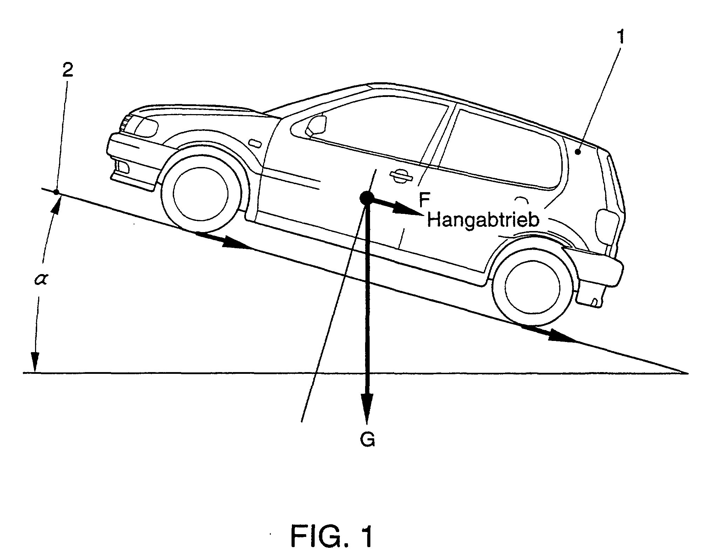

In Fig. 1 ist schematisch ein Fahrzeug 1 auf einer geneigten Fahrbahn 2 dargestellt. Die Neigung der Fahrbahn 2 ist durch einen Winkel $\alpha$ symbolisiert. Die Erfindung ist aber ebensogut auf andere Fälle anwendbar, wo z.B. ein Kraftfahrzeug durch eine Last nach hinten gezogen wird. In Fig. 1 hat das Fahrzeug 1 ein Gewicht G, das das Fahrzeug mit einer Hangabtriebskraft $F_{Hangabtriebskraft}$ als äußerer Kraft

$$F_{Hangabtriebskraft} = G \sin\alpha$$

hangabwärts zieht. Wenn die äußere Kraft zu groß wird, aktiviert das erfindungsgemäße Verfahren ein Bremssystem und ein Kupplungssystem des Kraftfahrzeuges 1. Auslöser des Verfahrens ist dabei die relative Bewegung des Fahrzeugs 1 gegenüber einer externen Referenz wie z.B. einem Baum am Fahrbahnrand und die gewünschte Motorleistung. Wenn die äußere Kraft oder Hangabtriebskraft $F_{Hangabtriebskraft}$ so groß wird, daß die Motorantriebskraft nicht ausreicht, das Fahrzeug 1 in die gewünschte Richtung (hangaufwärts) zu bewegen und die Gefahr besteht, daß das Fahrzeug aufgrund der äußeren Kraft gegen die Motorantriebskraft nach hinten rollt, so soll die Bewegung des Kraftfahrzeugs 1 in eine andere als die gewünschte Richtung vermieden werden, indem das Fahrzeug gebremst wird. Damit der Motor dadurch nicht abstirbt, wird gleichzeitig die Kupplung gelöst.

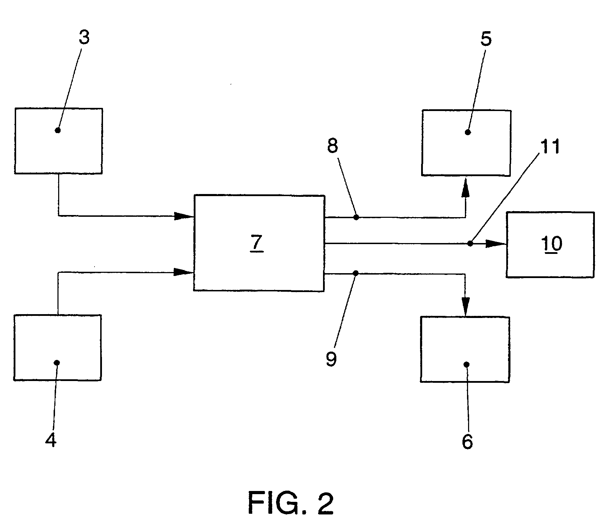

Das erfindungsgemäße Verfahren wird im folgenden mit Bezug auf Fig. 2 erläutert, in der eine Ausführungsform der erfindungsgemäßen Vorrichtung schematisch dargestellt ist. Die erfindungsgemäße Vorrichtung umfaßt im wesentlichen eine Geschwindigkeitserfassungsvorrichtung 3, die die Geschwindigkeit des Fahrzeugs 1 gegenüber der Fahrbahn 2 erfaßt, eine Motorleistungserfassungsvorrichtung 4, die die Leistung des Motors des Fahrzeugs 1 erfaßt, und eine Steuereinheit 7, die die Ausgangssignale der Geschwindigkeitserfassung 3 und der Motorleistungserfassungsvorrichtung 4 einliest und weiter verarbeitet und Aktivierungssignale 8 und 9 an einen Kupplungssteller 5 bzw. ein Antiblockiersystem 6 ausgibt.

Um die Fahrzeuggeschwindigkeit zu ermitteln, kann ein Signal von einem (nicht dargestellten) Abstandssensor verwendet werden, der in dem Fahrzeug 1 eingebaut ist.

Aus der zeitlichen Entwicklung eines Abstandssignals kann man die relative Geschwindigkeit des Fahrzeugs 1 gegenüber einem (nicht dargestellten) Gegenstand wie z.B. einem Baum am Fahrbahnrand ermitteln. Ebenso kann die Motorleistungserfassungsvorrichtung 4 z.B. als Eingangsgröße den Stellwinkel der Drosselklappe erfassen und daraus die momentane Leistung des Motors ermitteln. Die Motorleistungserfassungsvorrichtung 4 kann als Eingangssignal auch das Antriebsmoment des Motors erfassen und daraus die Motorleistung ermitteln. Daneben gibt es weitere Verfahren im Stand der Technik zum Bestimmen der Motorleistung, die dem Fachmann allgemein bekannt sind und daher hier nicht weiter erläutert werden. Die einzelnen Erfassungsvorrichtungen sind jedoch nur zur Erläuterung der Erfindung als separate Komponenten aufgeführt. Dem Fachmann ist klar, daß für die Ermittlung der Geschwindigkeit des Fahrzeugs z.B. die Ausgangsgröße des ABS-Systems und für die Ermittlung der Motorleistung die Ausgangsgröße der Motorsteuerung verwendet werden kann und daher nicht zusätzlich Sensoren zur Umsetzung der Erfindung vorgesehen werden müssen.

Bei dem erfindungsgemäßen Verfahren wird die Geschwindigkeit des Kraftfahrzeugs 1 mit der Geschwindigkeitserfassungsvorrichtung 2 erfaßt und mit einer Referenzgeschwindigkeit verglichen. Die Referenzgeschwindigkeit ist ein Wert, der bei der Fertigung des Fahrzeugs oder bei dem Einbau der erfindungsgemäßen Vorrichtung zum Aktivieren eines Bremssystems in einem (nicht dargestellten) Speicher in der zentralen Steuereinheit 7 des Fahrzeugs abgespeichert wird. Insbesondere wird als Wert für die Referenzgeschwindigkeit Null gewählt, so daß vor einem Zurückrollen des Fahrzeugs das erfindungsgemäße Verfahren ausgelöst wird. Gleichzeitig mit dem Erfassen der Geschwindigkeit des Kraftfahrzeugs 1 wird seine Motorleistung erfaßt und mit einer Referenzmotorleistung verglichen. Die Referenzmotorleistung ist ebenfalls ein Wert, der bei der Fertigung des Fahrzeugs oder bei dem Einbau der erfindungsgemäßen Vorrichtung zum Aktivieren eines Bremssystems in einem (nicht dargestellten) Speicher in der zentralen Steuereinheit 7 des Fahrzeugs abgespeichert wird. Insbesondere wird als Wert für die Referenzmotorleistung ein Leerlaufwert gewählt. Aufgrund der beiden Vergleichsergebnisse wird ein erstes Aktivierungssignal 8 von der Steuereinheit 7 an das Bremssystem 5 ausgegeben, so daß eine Bremskraft auf die Räder ausgeübt wird. Das Bremssystem 5 ist vorzugsweise ein Antiblockiersystem (ABS), dessen bereits vorhandenen Komponenten von dem erfindungsgemäßen Verfahren mit genutzt werden können. Ein zweites Aktivierungssignal 9 wird von der Steuereinheit 7 an den Kupplungssteller 6 ausgegeben. Der Kupplungssteller 6 dient dazu, die Kupplung zu lösen, wenn er aktiviert wird, so daß der Triebstrang des Fahrzeuges 1 unterbrochen wird. Erfindungsgemäß wird damit verhindert, daß der Motor abstirbt, wenn seine Last zu groß wird. Bei einem bereits vorhandenen Antiblockiersystem 5 und Kuppplungssteller 6 und einer zentralen Steuerung kann das erfindungsgemäße Verfahren als Datenverarbeitungsprogramm in der zentralen Steuerung des Kraftfahrzeuges 1 sehr einfach implementiert werden, wodurch die Kosten der Implementierung des erfindungsgemäßen Verfahrens und der entsprechenden Vorrichtung bei der Herstellung eines Fahrzeuges sehr niedrig bleiben.

Das erste und zweite Aktivierungssignal 8 bzw. 9 wird von der Steuereinheit 7 dann ausgegeben, wenn die Geschwindigkeit des Fahrzeugs 1 einen Wert annimmt, der unter der Referenzgeschwindigkeit liegt, und gleichzeitig die Motorleistung einen Wert annimmt, der über der Referenzmotorleistung liegt. Sind beide Aktivierungsbedingungen erfüllt, dann wird die Kupplung über den Kupplungssteller 6 gelöst und gleichzeitig die Bremse aktiviert, so daß die Räder des Kraftfahrzeugs 1 blockieren. Das Fahrzeug bleibt stehen, der Motor läuft weiter.

In einer bevorzugten Ausführungsform der Erfindung haben die Aktivierungssignale 8 und 9 eine Stufenform. D.h. sie entsprechen einem Ein-/Aus-Zustand. Wird das Bremssystem 6 und der Kupplungssteller 6 nicht aktiviert, so ist das Aktivierungssignal 8 und 9 auf logisch Null. Wird das Bremssystem 6 und der Kupplungssteller 6 dagegen aktiviert, so ist das Aktivierungssignal 8 und 9 auf logisch Eins. In dem jeweiligen Zustand bleibt das Aktivierungssignal so lange, bis entweder die Geschwindigkeit des Fahrzeugs oder die Motorleistung des Fahrzeugs den jeweiligen Referenzwert überschreitet.

Damit der Motor des Fahrzeugs 1 nach Lösen der Kupplung nicht aufgrund der abgekoppelten Last eine unnötig hohe Motordrehzahl annimmt, wird die Motordrehzahl in einer bevorzugten Ausführungsform der Erfindung auf der Drehzahl vor dem Aktivierungssignal "eingefroren", d.h. von der Steuereinheit 7 wird an eine elektronische Steuerung (EGas) 10 für das Einstellen der Drosselklappe des Fahrzeugs ein drittes Aktivierungssignal 11 ausgegeben, so daß die Drosselklappe zu einem vorgegebenen Grad geschlossen wird und so die Motordrehzahl auf eine gewünschte Motordrehzahl sinkt. Die Drosselklappe wird bevorzugt so weit geschlossen, daß die Motordrehzahl der Motordrehzahl vor Ausgabe der Aktivierungssignale durch die Steuereinheit 7 entspricht.

In einer alternativen Ausführungsform wird die Motordrehzahl durch das dritte Aktivierungssignal 11 auf eine Leerlaufdrehzahl eingestellt.

Das Aktivierungssignal 11 kann wie oben ein stufenförmiges Signal sein, das nur zwei Zustände annimmt. Es kann aber auch ein Signal mit einem kontinuierlichen Wertesatz sein, wobei sein Wert bei der Ausgabe durch die Steuereinheit 7 von der Motordrehzahl vor Erfüllung der beiden Aktivierungsbedingungen abhängt.

Wenn die Ursache für die übergroße Belastung des Fahrzeugantriebs beseitigt worden ist, d.h. die äußere Kraft nicht mehr auf das Fahrzeug wirkt, muß die Kontrolle über das Fahrzeug 1 und seinen Antrieb wieder dem Fahrer übergeben werden. Die Bremse muß wieder gelöst werden, und die Kupplung muß den Antriebsstrang des Fahrzeugs wieder schließen. Ein Zurücksetzen des ersten und zweiten Aktivierungssignals 8 bzw. 9 und in bevorzugten Ausführungsformen der Erfindung weiteren Aktivierungssignalen erfolgt z.B. durch (stärkeres) Betätigen des (nicht gezeigten) Fahrpedals. Wenn der Fahrer das Fahrpedal betätigt, wird das zweite Aktivierungssignal 9 beendet, so daß die Kupplung erneut greift. Gleichzeitig wird in der bevorzugten Ausführungsform der Erfindung mit dem dritten Aktivierungssignal 11 zum Senken der Motordrehzahl auf den letzten Wert oder eine Leerlaufdrehzahl die Drosselklappe weiter geöffnet. Schließlich wird die Bremse praktisch zeitgleich mit den beiden anderen Vorgängen gelöst, so daß das Fahrzeug wieder nur mit der Motorkraft gehalten oder bewegt wird.

Insbesondere ist die Steuereinheit 7 mit der Geschwindigkeitserfassungsvorrichtung 3, der Motorleistungserfassungsvorrichtung 4, dem Antiblockiersystem 5 und dem Kupplungssteller 6 direkt oder über ein Bussystem verbunden, mit dem auch die übrigen Fahrzeugkomponenten verbunden sind. Ein solches Bussystem ist z.B. ein CAN-Bus.

**BEZUGSZEICHENLISTE**

| 1 | Kraftfahrzeug |
|---|---|
| 2 | Fahrbahn |
| 3 | Geschwindigkeitserfassungsvorrichtung |
| 4 | Motorleistungserfassungsvorrichtung |
| 5 | Antiblockiersystem |
| 6 | Kupplungssteller |

| 7 | Steuereinheit |
| 8 | erstes Aktivierungssignal für Bremssystem |
| 9 | zweites Aktivierungssignal für Kupplungssteller |
| 10 | elektronische Motorleistungssteuerung |
| 11 | drittes Aktivierungssignal für die Motorleistungssteuerung |
| $\alpha$ | Neigungswinkel der Fahrbahn 2 |
| G | Gewicht des Fahrzeugs |
| $F_{Hangabtriebskraft}$ | Hangabtriebskraft des Fahrzeugs |

**Patentansprüche**

1. Verfahren zum Aktivieren eines Bremssystems (5) eines Kraftfahrzeuges (1) mit den Schritten:

   Erfassen der Geschwindigkeit des Kraftfahrzeugs (1) durch eine Geschwindigkeitserfassungsvorrichtung (3) und Vergleichen der Geschwindigkeit mit einer Referenzgeschwindigkeit,
   Erfassen der Motorleistung des Kraftfahrzeugs (1) durch eine Motorleistungserfassungsvorrichtung (4) und Vergleichen der Motorleistung mit einer Referenzmotorleistung,
   Ausgeben eines ersten Aktivierungssignals (8) an das Bremssystem (5), so daß eine Bremskraft auf die Räder ausgeübt wird, und eines zweiten Aktivierungssignals (9) an einen Kupplungssteller (6), so daß die Kupplung gelöst wird, wenn die Geschwindigkeit einen Wert unter der Referenzgeschwindigkeit annimmt und die Motorleistung einen Wert über der Referenzmotorleistung hat.

2. Verfahren nach Anspruch 1,
   **dadurch gekennzeichnet, daß**
   als Referenzwert ein Schwellwert genommen wird.

3. Verfahren nach Anspruch 1,
   **gekennzeichnet durch**
   Ausgeben eines dritten Aktivierungssignals (11) an eine elektronische Motorleistungssteuerung (10), so daß die Motordrehzahl des Fahrzeugs (1) konstant bleibt.

4. Vorrichtung zum Aktivieren eines Bremssystems (5) eines Kraftfahrzeuges (1), die umfaßt:

   eine Geschwindigkeitserfassungsvorrichtung (3) zum Erfassen der Geschwindigkeit des Kraftfahrzeugs (1) und
   eine Motorleistungserfassungsvorrichtung (4) zum Erfassen der Motorleistung, **gekennzeichnet durch**
   eine Steuereinheit (7) zum Empfangen der Geschwindigkeit des Kraftfahrzeugs (1) und der Motorleistung von der Geschwindigkeitserfassungsvorrichtung (3) bzw. von der Motorleistungserfassungsvorrichtung (4),
   zum Vergleichen der Geschwindigkeit mit einer Referenzgeschwindigkeit und zum Vergleichen der Motorleistung mit einer Referenzmotorleistung, und
   zum Ausgeben eines ersten Aktivierungssignals (8) an das Bremssystem (5), so daß eine Bremskraft auf die Räder ausgeübt wird, und eines zweiten Aktivierungssignals (9) an einen Kupplungssteller (6), so daß die Kupplung gelöst wird, wenn die Geschwindigkeit einen Wert unter der Referenzgeschwindigkeit annimmt und die Motorleistung einen Wert über der Referenzmotorleistung annimmt.

5. Vorrichtung nach Anspruch 4,
   **dadurch gekennzeichnet, daß**
   die Steuereinheit (7) ein drittes Aktivierungssignal (11) an eine elektronische Motorsteuerung (10) ausgibt, so daß eine Motordrehzahl nach dem Lösen der Kupplung einen vorgegebenen Wert annimmt.

**Claims**

1. Method for activating a brake system (5) of a motor vehicle (1) having the steps:

   sensing the speed of the motor vehicle (1) by means of a speed sensing device (3) and comparing the speed with a reference speed,

sensing the engine output of the motor vehicle (1) by means of an engine output sensing device (4) and comparing the engine output with a reference engine output,
outputting a first activation signal (8) to the brake system (5) so that a braking force is exerted on the wheels, and outputting a second activation signal (9) to a clutch actuator (6) so that the clutch is released if the speed assumes a value below the reference speed and the engine output has a value above the reference engine output.

2. Method according to Claim 1, **characterized in that** a threshold value is taken as the reference value.

3. Method according to Claim 1, **characterized by** outputting a third activation signal (11) to an electronic engine output controller (10) so that the engine speed of the vehicle (1) remains constant.

4. Device for activating a brake system (5) of a motor vehicle (1) which comprises:

a speed sensing device (3) for sensing the speed of the motor vehicle (1), and an engine output sensing device (4) for sensing the engine output, **characterized by** a control unit (7) for receiving the speed of the motor vehicle (1) and the engine output from the speed sensing device (3) or from the engine output sensing device (4), respectively,
for comparing the speed with a reference speed and for comparing the engine output with a reference engine output, and
for outputting a first activation signal (8) to the brake system (5) so that a braking force is exerted on the wheels, and for outputting a second activation signal (9) to a clutch actuator (6) so that the clutch is released if the speed assumes a value below the reference speed and the engine output assumes a value above the reference engine output.

5. Device according to Claim 4, characteized in that the control unit (7) outputs a third activation signal (11) to an electronic engine controller (10) so that an engine speed assumes a predefined value after the clutch has been released.

**Revendications**

1. Méthode pour activer le système de freinage (5) d'un véhicule automobile (1) comprenant les étapes suivantes :

Détection de la vitesse du véhicule automobile (1) par le biais d'un dispositif de détection de la vitesse (3) et comparaison de la vitesse avec une vitesse de référence,
détection de la puissance du moteur du véhicule automobile (1) par le biais d'un dispositif de détection de la puissance du moteur (3) et comparaison de la puissance du moteur avec une puissance du moteur de référence,
émission d'un premier signal d'activation (8) au système de freinage (5) afin d'appliquer une force de freinage aux roues et d'un deuxième signal d'activation (9) à un mécanisme de commande d'embrayage (6) afin que l'embrayage soit déclenché lorsque la vitesse prend une valeur inférieure à la vitesse de référence et la puissance du moteur prend une valeur supérieure à la puissance du moteur de référence.

2. Méthode selon la revendication 1, **caractérisée en ce que** la valeur de référence adoptée est une valeur de seuil.

3. Méthode selon la revendication 1, **caractérisée par** l'émission d'un troisième signal d'activation (11) à une commande électronique de la puissance du moteur (10) afin que la vitesse de rotation du moteur du véhicule (1) reste constante.

4. Dispositif pour activer un système de freinage (5) d'un véhicule automobile (1) qui comprend :

un dispositif de détection de la vitesse (3) pour détecter la vitesse du véhicule automobile (1) et
un dispositif de détection de la puissance du moteur (4) pour détecter la puissance du moteur,

**caractérisé par**

un module de commande (7) destiné à recevoir la vitesse du véhicule automobile (1) et la puissance du moteur en provenance du dispositif de détection de la vitesse (3) ou du dispositif de détection de la puissance du moteur (4),
pour comparer la vitesse avec une vitesse de référence et pour comparer la puissance du moteur avec une puissance du moteur de référence, et pour émettre un premier signal d'activation (8) au système de freinage (5) afin d'appliquer une force de freinage aux roues et un deuxième signal d'activation (9) à un mécanisme de commande d'embrayage (6) afin que l'embrayage soit déclenché lorsque la vitesse prend une valeur inférieure à la vitesse de référence et la puissance du moteur prend une valeur supérieure à la puissance du moteur de référence.

5.   Dispositif selon la revendication 4, **caractérisé en ce que** le module de commande (7) émet un troisième signal d'activation (11) à une commande électronique du moteur (10) afin que la vitesse de rotation du moteur prenne une valeur prédéfinie après le déclenchement de l'embrayage.

FIG. 1

FIG. 2